# EUROPÄISCHE PATENTSCHRIFT

(11) **EP 1 908 652 B1**
(45) Veröffentlichungstag und Bekanntmachung des Hinweises auf die Patenterteilung: **05.01.2011**
(21) Anmeldenummer: 08001115.8
(22) Anmeldetag: 08.01.1999
(51) Int. Cl.: B60S 1/08

(54) **Regensensor**
Rain sensor
Détecteur de pluie

(30) Priorität: 08.04.1998 DE 19815749
(43) Veröffentlichungstag der Anmeldung: 09.04.2008
(62) Teilanmeldung aus: 03025962.6
(73) Patentinhaber: Robert Bosch GmbH, 70442 Stuttgart (DE)
(72) Erfinder: Michenfelder, Gebhard, 77839 Lichtenau (DE); Riehl, Guenther, 77815 Buehl (DE); Burkart, Manfred, 76473 Iffezheim (DE); Roth, Klaus, 73207 Plochingen (DE)

(56) Entgegenhaltungen:
- FR-A- 2 722 291
- US-A- 5 543 923

## Beschreibung

Die Erfindung betrifft einen Regensensor mit den im Oberbegriff des Anspruchs 1 genannten Merkmalen.

### Stand der Technik

Es sind Scheibenwischvorrichtungen für Windschutzscheiben von Kraftfahrzeugen bekannt, bei denen eine Steuerung der Scheibenwischer nicht nur über einen herkömmlichen Lenkstockhebel, sondern zusätzlich über einen optischen Regensensor erfolgt. Der optische Regensensor umfaßt üblicherweise eine Lichtquelle, deren elektromagnetische Strahlung von der Windschutzscheibe, je nach Feuchtigkeitsbelag auf der Windschutzscheibe unterschiedlich reflektiert wird. Der reflektierte Anteil wird mittels eines Photoelementes erfaßt, so daß ein dem Feuchtigkeitsbelag entsprechendes Ausgangssignal des Regensensors bereitgestellt werden kann. Diese Ausgangssignale können derart ausgewertet und zur Steuerung der Scheibenwischer verwendet werden, daß sowohl die Einschaltung als auch die Wischergeschwindigkeit in Abhängigkeit von einer gemessenen Regenmenge variiert wird.

Bekannte Regensensoren werden üblicherweise innen an der Windschutzscheibe angebracht, vorzugsweise hinter einem Innenrückspiegel. Zur Befestigung werden beispielsweise geklebte Metallfüße verwendet. Bekannt sind daneben auch Befestigungen über einen zusätzlichen Rahmen, der zuvor mit der Scheibe verbunden wird und in den später das Regensensorgehäuse eingedrückt wird.

Aus der FR-A-2 722 291 ist ein Regensensor mit den Merkmalen des Oberbegriffs bekannt.

### Vorteile der Erfindung

Der erfindungsgemäße Regensensor mit den im Anspruch 1 genannten Merkmalen weist insbesondere den Vorteil auf, dass im wesentlichen nur drei Einzelteile zu seinem Aufbau erforderlich sind. Der Regensensor besteht im wesentlichen aus einem Gehäuse, aus dem die elektrischen Leitungen zur Verbindung mit einer nachgeschalteten Auswerteeinheit herausgeführt sind, einer Leiterplatte beziehungsweise Platine sowie einem Lichtleitkörper, der vorzugsweise bereits über alle notwendigen optischen Linsenstrukturen verfügt. Dadurch wird ein kostengünstiger, sehr kompakter und einfach zu montierender Regensensor bereitgestellt. Insbesondere über eine transparente Folie, die vorzugsweise beidseitig selbstklebend ist, lässt sich eine einfache Montage des Regensensors erreichen, ohne dass dessen optische Eigenschaften beeinträchtigt werden. Ferner lässt sich der Regensensor mit wenigen Montageschritten herstellen, so dass dieser kostengünstig in Massenfertigung produzierbar ist.

Durch eine Montage aller erforderlichen elektronischen und optoelektronischen Bauteile auf einer gemeinsamen Platine, vorzugsweise in SMD-(Surface Mounted Device)-Technik bestückt, lassen sich sehr kompakte Sensoren realisieren, die sich zudem im Fahrzeug problemlos montieren lassen. So kann ein derartiger Regensensor deutlich kompakter ausgeführt sein als bekannte Regensensoren und wie diese beispielsweise hinter einem Innenrückspiegel an der Innenseite der Windschutzscheibe montiert sein.

In bevorzugter Ausgestaltung der Erfindung bildet der Lichtleitkörper gleichzeitig den Deckel des Sensorgehäuses und bildet auf diese Weise mit diesem ein komplettes Elektronikgehäuse. Die Verbindung kann in vorteilhafter Weise durch Verklipsen sichergestellt werden. Eine abziehbare Schutzfolie auf äußerer Klebeseite der transparenten Klebefolie bildet gleichzeitig einen Schutz des Lichtleitkörpers gegen mechanische Beschädigung bereits beim Transport. Durch den sehr kompakten Aufbau sind Autohersteller als Abnehmer derartiger Regensensoren in die Lage versetzt, eine einfache und schnelle und damit sehr kostengünstige Montage vornehmen zu können, die sich zudem problemlos automatisieren läßt.

Ein Ausgangssignal des erfindungsgemäßen Regensensors läßt sich in vorteilhafter Weise zur Ansteuerung einer Scheibenwischvorrichtung und/oder einer Fahrzeugbeleuchtung einsetzen. So kann es beispielsweise bei stärkerem Regen oder bei Nebel sinnvoll sein, zusätzliche Nebelscheinwerfer automatisch einzuschalten.

In einer bevorzugten Ausgestaltung der Erfindung kann neben dem Regensensor zusätzlich ein Helligkeitssensor für Umgebungslicht integriert sein, der ein weitgehend vom Tageslicht beeinflußtes Signal liefert und dementsprechend einen relativ weiten und nach oben gerichteten Öffnungskegel für einfallendes Licht aufweist. Vorteilhaft ist weiterhin, wenn der Helligkeitssensor empfindlich ist auf ultraviolette Lichtanteile, wie sie im Sonnenlicht, nicht jedoch bei künstlichem Licht, vorkommen. Auf diese Weise kann eine Fehlauslösung durch starkes künstliches Licht, beispielsweise bei einer Tunneldurchfahrt, vermieden werden.

Die Fokussierung des einfallenden Lichts kann in vorteilhafter Weise durch den Lichtleitkörper erfolgen, der gleichzeitig als Grundplatte für das Sensorgehäuse fungiert. Ein solcher Lichtleitkörper kann beispielsweise aus einem Kunststoff wie PMMA (Polymethylmetachrylat) im Spritzgußverfahren hergestellt sein, wobei sich in einfacher Weise optische Strukturen wie Sammellinsen im Formprozeß einbringen lassen. Bei Verwendung von infrarotem Licht für die Regensensorfunktion ist es vorteilhaft, den Lichtleitkörper aus schwarzem PMMA herzustellen und lediglich den Lichtdurchtritt für den Umgebungslichtsensor aus klarem Kunststoff vorzusehen. Dies läßt sich durch Verarbeitung im sogenannten Zweifarbspritzverfahren oder auch durch Kombination, durch Verklebung oder Verschweißung, zweier einfarbiger Kunststoffteile realisieren.

Weitere vorteilhafte Ausgestaltungen der Erfindung ergeben sich aus den übrigen, in den Unteransprüchen genannten Merkmalen.

### Zeichnungen

Die Erfindung wird nachfolgend in Ausführungsbeispielen anhand der zugehörigen Zeichnungen näher erläutert. Es zeigen:
- Figur la: eine schematische Seitenansicht eines er- findungsgemäßen Regensensors,
- Figur 1b: eine schematische Draufsicht auf den Re- gensensor entsprechend Figur 1,
- Figur 2: eine schematische Schnittansicht des er- findungsgemäßen Regensensors in einer Ex- plosionsdarstellung und

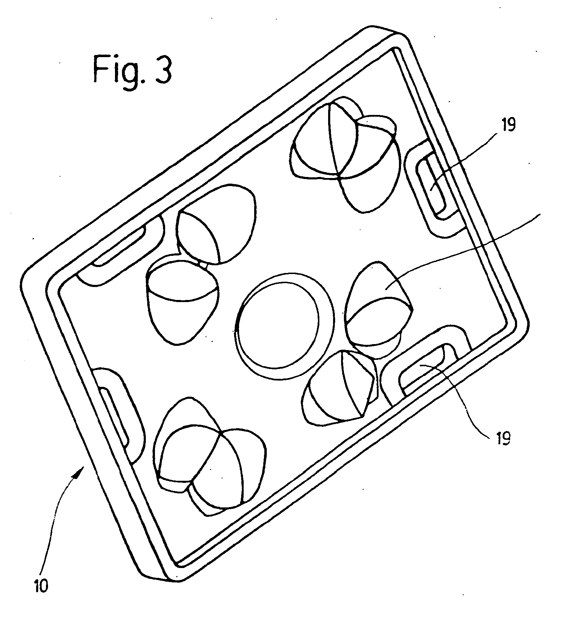

- Figur 3: einen Lichtleitkörper in einer perspekti- vischen Darstellung.

### Beschreibung der Ausführungsbeispiele

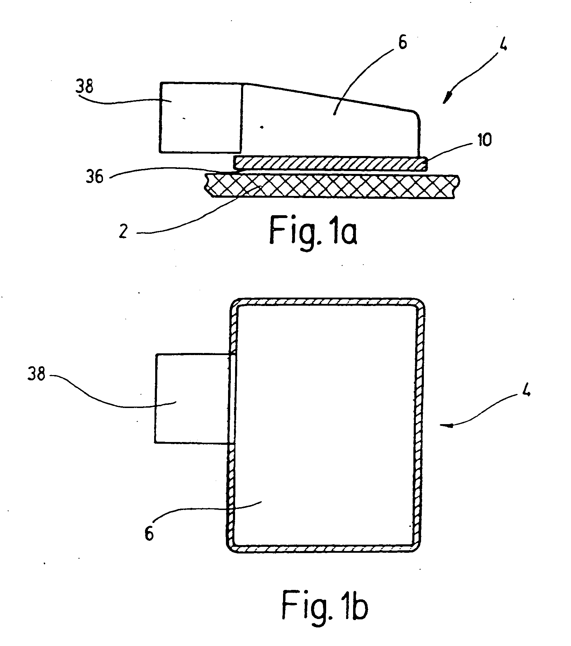

Figur 1a zeigt in einer schematischen Seitenansicht einen erfindungsgemäßen Regensensor 4, der innen an einer Windschutzscheibe 2 eines Kraftfahrzeuges befestigbar ist. Die Montage des Regensensors 4 hinter der Windschutzscheibe 2 kann beispielsweise durch Klebung in Höhe eines hier nicht dargestellten Innenrückspiegels erfolgen. Bei einer Positionierung hinter dem Rückspiegel entsteht keine zusätzliche Sichtbehinderung für einen Fahrer. Die elektronischen und optoelektronischen Bauteile des Regensensors 4 sind umschlossen von einem Gehäuse 6, das nach innen hin, das heißt zum Fahrgastraum, lichtundurchlässig ist. Die Gehäuseunterseite, die eine flächige Verbindung zur Windschutzscheibe 2 bildet, stellt ein Lichtleit körper 10 dar, in den alle zur Funktion erforderlichen optischen Strukturen (Linsenstrukturen, Lichtleitstrukturen und dergleichen) eingebracht sind. Dies kann beispielsweise durch ein Spritzgußverfahren eines geeigneten optisch durchlässigen Kunststoffes erfolgen. Zur mechanischen und optischen Koppelung des Regensensors 4 mit der Windschutzscheibe ist der Lichtleitkörper 10 über eine beidseitig selbstklebende transparente Klebefolie 36 mit der Windschutzscheibe 2 verbunden.

Figur 1b zeigt eine schematische Draufsicht auf den Regensensor 4 entsprechend Figur la. Erkennbar ist hierbei ein Stecker 38 zur elektrischen Verbindung zu einer nachgeschalteten, hier jedoch nicht dargestellten, Auswerteeinheit. Diese kann anhand der vom Regensensor 4 gelieferten Signale eine Scheibenwischvorrichtung und/oder eine Fahrzeugbeleuchtung variabel ansteuern. Der Stecker 38 kann, je nach Ausführungsform vier oder beispielsweise acht Steckerstifte aufweisen, die in eine montierte Platine im Gehäuse 6 hineinragen und dort zur Herstellung einer elektrischen Verbindung verlötet oder verpreßt sind.

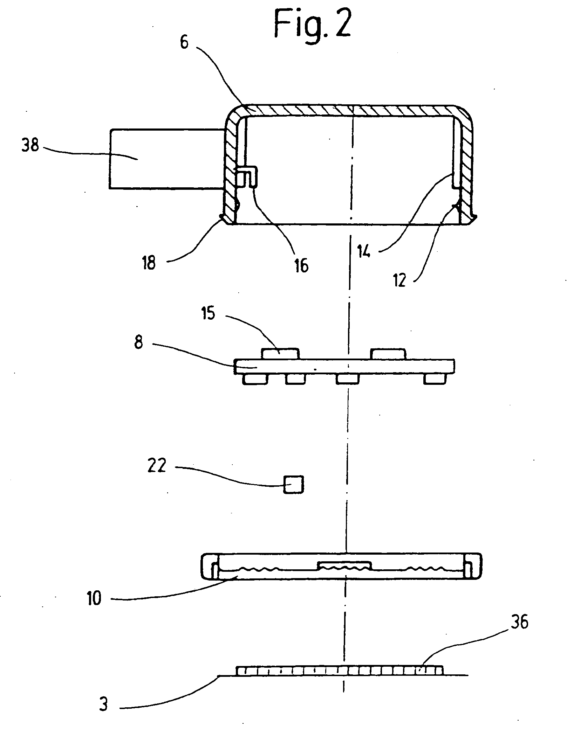

Die Figur 2 zeigt eine schematische Schnittansicht auf den erfindungsgemäßen Regensensor 4 in einer Explosionsdarstellung. Im topfförmigen Gehäuse 6, das in dieser Darstellung nach unten offen ist, ist eine Platine 8 gegen einen Absatz 14 innen im Gehäuse 6 einlegbar, auf der elektronische und optoelektronische Bauelemente, beispielsweise in SMD(surface mounted device)-Technik, montiert sind. Um die Platine 8 im Gehäuse 6 eindeutig zu fixieren, liegt sie gegen den Absatz 14 im Gehäuse an, nachdem sie beim Einlegen über die umlaufende Nut 12 gedrückt wurde. Diese hält die Platine 8 fest und hindert sie so am herausfallen nach unten. Weiterhin sind die nach innen in das Gehäuse 6 ragenden Steckerstifte 16 erkennbar, die beispielsweise mit einer partiellen Lötung oder dergleichen mit den passenden Leiterbahnen der Platine 8 verbunden werden. Ebenso möglich ist auch eine leitende Preßverbindung.

Als Bauteil ist beispielsweise eine auf der Oberseite der Patine 8 montierte Leuchtdiode beziehungsweise LED 15 erforderlich, die sichtbares oder infrarotes Licht in Form eines gerichteten Lichtstrahles emittiert. Der Lichtstrahl trifft in einem spitzen Winkel auf die Windschutzscheibe 2 auf und wird aufgrund deren Brechungsindex an ihrer äußeren Grenzfläche zur Luft normalerweise vollständig reflektiert und trifft nahezu vollständig als reflektierter Anteil auf eine Photodiode, die ebenfalls an geeigneter Stelle auf der Oberseite der Platine 8 montiert ist. Befindet sich nun am Ort der Reflexion des Lichtstrahls ein Wassertropfen außen auf der Windschutzscheibe 2, resultiert an der äußeren Grenzfläche der Scheibe zur Luft ein verändertes Brechungsverhalten, wodurch der Lichtstrahl an der Grenzfläche nicht vollständig reflektiert wird, sondern ein nach außen austretender gestreuter Anteil entsteht. Das dadurch abgeschwächte Signal des reflektierten Anteiles kann von der Photodiode detektiert und quantitativ ausgewertet werden und somit als Feuchtigkeitsschleier beziehungsweise Regen außen auf der Windschutzscheibe 2 des Kraftfahrzeuges erfaßt werden.

Die gewünschte Fokussierung des Lichtstrahles beziehungsweise des reflektierten Anteiles kann zweckmäßigerweise durch einen geeignet geformten Lichtleitkörper 10, bestehend aus einem hochtransparenten und gut spritzgießfähigen Kunststoff wie beispielsweise PMMA (Polymethylmetachrylat), erreicht werden, der gleichzeitig die Grundseite des Gehäuses 6 bildet und flächig über eine transparente Klebefolie 36 mit der Windschutzscheibe 2 verbunden ist. Durch geeignete Formung, vorzugsweise im Spritzgußverfahren, kann der Lichtleitkörper 10 eingeformte linsenförmige Strukturen erhalten, die für die gewünschte Fokussierung und Bündelung des von der LED 15 emittierten Lichtes sowie der von der Photodiode detektierten Lichtanteile sorgen.

Auf der Platine 8 ist weiterhin ein Umgebungslichtsensor 22 angeordnet, der von außen durch die Windschutzscheibe 2 des Kraftfahrzeuges fallendes Umgebungslicht in seiner Helligkeit erfassen und ein davon abhängiges Steuersignal für eine automatische Lichtsteuerung beziehungsweise für eine Tag/Nacht-Umschaltung der Scheibenwischersteuerung im Kraftfahrzeug generieren kann. Zweckmäßigerweise reagiert der Umgebungslichtsensor 22 vorzugsweise auf bestimmte UV-Lichtanteile, die nur im natürlichen Sonnenlicht vorkommen, um auf diese Weise ein unbeabsichtigtes Abschalten der Fahrzeugscheinwerfer in hell beleuchteten Tunnels oder Unterführungen mit starken künstlichen Lichtquellen auszuschließen.

Bei Verwendung von infrarotem Licht für den Regensensor 4 kann der Lichtleitkörper 10 beispielsweise aus schwarzem PMMA bestehen und nur eine kleine Stelle für den Umgebungslichtsensor 22 aus klarem Material enthalten.

Erkennbar ist weiterhin die transparente Klebefolie 36, die eine flächige Verbindung zur Windschutzscheibe 2 herstellt, wobei in der Figur 2 eine zusätzliche abziehbare Schutzfolie 3 auf der transparenten Klebefolie 36 erkennbar ist. Nach Entfernen dieser Schutzfolie 3 kann der Regensensor 4 einfach an die gewünschte Stelle auf die Windschutzscheibe 2 geklebt werden. Die Schutzfolie 3 dient einem Schutz des Lichtleitkörpers 10 und der Klebefolie 26 während des Transportes, Montage oder dergleichen vor mechanischen Beschädigungen.

Figur 4 zeigt zur Verdeutlichung nochmals den Lichtleitkörper 10 mit den darin im Spritzgießprozeß eingebrachten fokussierenden Strukturen (Sammellinsen) in einer perspektivischen Darstellung. Erkennbar sind an äußeren Rand jeweils eine längliche Nut 19, in die jeweils ein passender Steg 18 des Gehäuses 6 geklipst werden kann (Figur 2) und so eine festgefügte Verbindung zwischen dem unten offenen Gehäuse 6 und dem den unteren Gehäusedeckel bildenden Lichtleitkörper 10 ermöglicht.

## Patentansprüche

1. Regensensor, insbesondere für Kraftfahrzeuge, mit einer wenigstens einen Sender und wenigstens einen Empfänger für elektromagnetische Wellen aufweisenden Messstrecke, in der eine Windschutzscheibe angeordnet ist und die die Wellenausbreitung zwischen dem wenigstens einen Sender und dem wenigstens einen Empfänger derart beeinflusst, dass sich bei Ausbildung eines Belages auf der Windschutzscheibe, insbesondere bei einer Benetzung durch Niederschlag, ein vom Empfänger sensiertes Ausgangssignal ändert, wobei die optischen und elektronischen Komponenten des Regensensors (4) in einem Gehäuse (6) montiert sind und eine Platine (8) gegen einen Absatz (14) innen im Gehäuse (6) einlegbar ist, auf der elektronische und optoelektronische Bauelemente montiert sind, **dadurch gekennzeichnet, dass** der Lichtleitkörper (10) aus einem Kunststoffteil im Zweifarb-Spritzverfahren besteht oder durch Kombination zweier einfarbiger Kunststoffe hergestellt ist.

2. Regensensor nach Anspruch 1, **dadurch gekennzeichnet, dass** der Lichtleitkörper (10) eine mit der Windschutzscheibe (2) flächig verbundene Grundplatte des Gehäuses (6) bildet.

3. Regensensor nach Anspruch 2, **dadurch gekennzeichnet, dass** alle optischen und elektronischen Komponenten des Regensensors (4) in SMD-Technik auf einer gemeinsamen Platine (8) montiert sind.

4. Regensensor nach Anspruch 3, **dadurch gekennzeichnet, dass** der Regensensor (4) in einem quaderförmigen Gehäuse (6) mit einem integriertem Stecker (38) zur elektrischen Verbindung mit einer nachgeschalteten Auswerteeinheit montiert ist.

5. Regensensor nach Anspruch 4, **dadurch gekennzeichnet, dass** die Platine (8) über Kontaktstifte mit dem Stecker (38) am Gehäuse (6) verbunden ist.

6. Regensensor nach Anspruch 7, **dadurch gekennzeichnet, dass** der Regensensor (4) von innen mit der Windschutzscheibe (2) verklebt ist.

7. Regensensor nach Anspruch 6, **dadurch gekennzeichnet, dass** eine transparente beidseitig selbstklebende Folie (36) als Verbindung zwischen Windschutzscheibe (2) und Lichtleitkörper (10) des Regensensors (4) vorgesehen ist.

8. Regensensor nach einem der vorhergehenden Ansprüche, **dadurch gekennzeichnet, dass** ein Ausgangssignal des Regensensors (4) an eine nachgeordnete Auswerteschaltung Informationen über einen momentanen Benetzungsgrad der Windschutzscheibe (2) enthält.

9. Regensensor nach Anspruch 8, **dadurch gekennzeichnet, dass** eine Scheibenwischvorrichtung und/oder eine Fahrzeugbeleuchtung in Abhängigkeit von den Ausgangssignalen des Regensensors (4) ansteuerbar sind.

10. Regensensor nach einem der vorhergehenden Ansprüche, **dadurch gekennzeichnet, dass** der wenigstens eine Sender eine LED (15) ist.

11. Regensensor nach Anspruch 10, **dadurch gekennzeichnet, dass** der erste Empfänger, der das von der wenigstens einen LED (15) emittierte optische Signal detektiert, eine Photodiode ist.

12. Regensensor nach einem der vorhergehenden Ansprüche, **dadurch gekennzeichnet, dass** als zweiter Empfänger wenigstens eine Umgebungslichtsensor (22) vorgesehen ist.

13. Regensensor nach einem der vorhergehenden Ansprüche, **dadurch gekennzeichnet, dass** der Umgebungslichtsensor (22) einen Öffnungswinkel von circa 40° mit einer Öffnungsrichtung in Fahrtrichtung nach schräg oben aufweist.

14. Regensensor nach einem der Ansprüche 12 oder 13, **dadurch gekennzeichnet, dass** der wenigstens eine Umgebungslichtsensor (22) auf ultraviolettes Licht, insbesondere auf Sonnenlicht, empfindlich sind.

15. Regensensor nach einem der vorhergehenden Ansprüche, **dadurch gekennzeichnet, dass** bei Einsatz von IR (Infrarot)-Licht der Lichtleitkörper (10) für die Regensensorfunktion aus schwarzem Kunststoff besteht.

16. Regensensor nach einem der vorhergehenden Ansprüche, **dadurch gekennzeichnet, dass** für den wenigstens einen Empfänger (20) optische Bereiche im Lichtleitkörper (10) aus transparentem (klarem) Kunststoff vorgesehen sind.

17. Regensensor nach einem der vorhergehenden Ansprüche, **dadurch gekennzeichnet, dass** der Lichtleitkörper (10) mit eingebrachten Linsenstrukturen zur Lichtbündelung versehen ist.

## Claims

1. Rain sensor, in particular for motor vehicles, having a measuring section which has at least one transmitter and at least one receiver for electromagnetic waves, in which a windscreen is arranged and which influences the propagation of waves between the at least one transmitter and the at least one receiver in such a manner that, when a coating forms on the windscreen, in particular when there is wetting due to precipitation, an output signal sensed by the receiver changes, the optical and electronic components of the rain sensor (4) being mounted in a housing (6), and a printed circuit board (8) on which electronic and optoelectronic components are mounted being able to be inserted against a shoulder (14) inside the housing (6), **characterized in that** the light guide body (10) consists of a plastic part formed by a two-colour injection-moulding process or is produced by a combination of two single-coloured plastics.

2. Rain sensor according to Claim 1, **characterized in that** the light guide body (10) forms a base plate of the housing (6), which base plate is connected over its surface area to the windscreen (2).

3. Rain sensor according to Claim 2, **characterized in that** all of the optical and electronic components of the rain sensor (4) are mounted on a common printed circuit board (8) using SMD technology.

4. Rain sensor according to Claim 3, **characterized in that** the rain sensor (4) is mounted in a cuboidal housing (6) with an integrated connector (38) for electrical connection to a downstream evaluation unit.

5. Rain sensor according to Claim 4, **characterized in that** the printed circuit board (8) is connected to the connector (38) on the housing (6) via contact pins.

6. Rain sensor according to Claim 7, **characterized in that** the rain sensor (4) is adhesively bonded to the windscreen (2) from the inside.

7. Rain sensor according to Claim 6, **characterized in that** a transparent film (36) which is self-adhesive on both sides is provided as a connection between the windscreen (2) and the light guide body (10) of the rain sensor (4).

8. Rain sensor according to one of the preceding claims, **characterized in that** an output signal from the rain sensor (4) to a downstream evaluation circuit contains information relating to an instantaneous degree of wetting of the windscreen (2).

9. Rain sensor according to Claim 8, **characterized in that** a windscreen wiping device and/or a vehicle lighting system can be controlled on the basis of the output signals from the rain sensor (4).

10. Rain sensor according to one of the preceding claims, **characterized in that** the at least one transmitter is an LED (15).

11. Rain sensor according to Claim 10, **characterized in that** the first receiver which detects the optical signal emitted by the at least one LED (15) is a photodiode.

12. Rain sensor according to one of the preceding claims, **characterized in that** at least one ambient light sensor (22) is provided as a second receiver.

13. Rain sensor according to one of the preceding claims, **characterized in that** the ambient light sensor (22) has an acceptance angle of approximately 40° with an acceptance direction obliquely upwards in the direction of travel.

14. Rain sensor according to either of Claims 12 and 13, **characterized in that** the at least one ambient light sensor (22) is sensitive to ultraviolet light, in particular to sunlight.

15. Rain sensor according to one of the preceding claims, **characterized in that**, when IR (infrared) light is used, the light guide body (10) for the rain sensor function is composed of black plastic.

16. Rain sensor according to one of the preceding claims, **characterized in that** optical regions of transparent (clear) plastic in the light guide body (10) are provided for the at least one receiver (20).

17. Rain sensor according to one of the preceding claims, **characterized in that** the light guide body (10) is provided with inserted lens structures for focusing the light.

## Revendications

1. Détecteur de pluie, en particulier pour véhicules automobiles, qui présente un parcours de mesure doté d'au moins un émetteur et d'au moins un récepteur d'ondes électromagnétiques et dans lequel est disposée une vitre de pare-brise qui agit sur la propagation des ondes entre le ou les émetteurs et le ou les récepteurs de telle sorte qu'un signal de sortie détecté par le récepteur se modifie lorsqu'il se forme une couche sur la vitre de pare-brise, en particulier lorsqu'elle est mouillée par des précipitations, les composants optiques et électroniques du détecteur de pluie (4) étant montés dans un boîtier (6) et une carte (8) pouvant être placée contre un appendice (14) situé à l'intérieur du boîtier (6) et sur lequel sont montés les composants électroniques et optoélectroniques, **caractérisé en ce que**
le corps (10) de guidage de lumière est constitué d'une pièce en matière synthétique obtenue par une opération d'injection en deux couleurs ou par la combinaison de deux matières synthétiques monochromes.

2. Détecteur de pluie selon la revendication 1, **caractérisé en ce que** le corps (10) de guidage de lumière forme une plaque de base du boîtier (6) reliée à plat à la vitre (2) du pare-brise.

3. Détecteur de pluie selon la revendication 2, **caractérisé en ce que** tous les composants optiques et électroniques du détecteur de pluie (4) sont montés sur une carte commune (8) par une technique SMD.

4. Détecteur de pluie selon la revendication 3, **caractérisé en ce que** le détecteur de pluie (4) est monté dans un boîtier (6) de forme parallélépipédique et doté d'une fiche (38) intégrée qui assure son raccordement électrique à une unité d'évaluation raccordée en aval.

5. Détecteur de pluie selon la revendication 4, **caractérisé en ce que** la carte (8) est reliée par des tiges de contact à la fiche (38) prévue sur le boîtier (6).

6. Détecteur de pluie selon la revendication 7, **caractérisé en ce que** le détecteur de pluie (4) est collé par l'intérieur sur la vitre (2) du pare-brise.

7. Détecteur de pluie selon la revendication 6, **caractérisé en ce qu'**un film transparent et autocollant double face (36) est prévu comme liaison entre la vitre (2) du pare-brise et le corps (10) de guidage de lumière du détecteur de pluie (4).

8. Détecteur de pluie selon l'une des revendications précédentes, **caractérisé en ce qu'**un signal de sortie du détecteur de pluie (4) contient pour une unité d'évaluation raccordée en aval des informations concernant le degré de mouillage de la vitre (2) du pare-brise à tout instant.

9. Détecteur de pluie selon la revendication 8, **caractérisé en ce qu'**un dispositif d'essuie-glace et/ou un éclairage du véhicule peuvent être commandés en fonction des signaux de sortie du détecteur de pluie (4).

10. Détecteur de pluie selon l'une des revendications précédentes, **caractérisé en ce que** le ou les émetteurs est/sont une/des LED (15).

11. Détecteur de pluie selon la revendication 10, **caractérisé en ce que** le premier récepteur qui détecte le signal optique émis par la ou les LED (15) est une photodiode.

12. Détecteur de pluie selon l'une des revendications précédentes, **caractérisé en ce que** le deuxième récepteur est au moins une sonde (22) de lumière de l'environnement.

13. Détecteur de pluie selon l'une des revendications précédentes, **caractérisé en ce que** la sonde (22) de lumière de l'environnement présente un angle d'ouverture d'environ 40° dont la direction d'ouverture est orientée obliquement vers le haut dans la direction d'avancement du véhicule.

14. Détecteur de pluie selon l'une des revendications 12 ou 13, **caractérisé en ce que** la ou les sondes (22) de lumière de l'environnement est/sont sensibles à la lumière ultraviolette et en particulier à la lumière solaire.

15. Détecteur de pluie selon l'une des revendications précédentes, **caractérisé en ce que** lorsque l'on utilise de la lumière infrarouge (IR), le corps (10) de guidage de lumière qui assure la fonction de détection de pluie est constitué de matière synthétique noire.

16. Détecteur de pluie selon l'une des revendications précédentes, **caractérisé en ce que** des parties optiques en matière synthétique transparente (limpide) sont prévues pour le ou les récepteurs (20) dans le corps (10) de guidage de lumière.

17. Détecteur de pluie selon l'une des revendications précédentes, **caractérisé en ce que** le corps (10) de guidage de lumière est doté de structures de lentille intégrées qui forment des faisceaux de lumière.
